# EUROPEAN PATENT APPLICATION

(11) **EP 3 349 158 A1**
(43) Date of publication of application: **18.07.2018**
(21) Application number: 17151614.9
(22) Date of filing: 16.01.2017
(51) Int. Cl.: G06Q 10/10

(54) **ONLINE INTERACTION CONTROL METHOD**

(71) Applicant: Sony Interactive Entertainment Inc., Tokyo 108-8270 (JP)
(72) Inventor: CLARK, Antony, London, W1F 7LP (GB); HUME, Murray, London, W1F 7LP (GB); BOOTH, John, London, W1F 7LP (GB); WYSS, Rafael, London, W1F 7LP (GB)
(74) Representative: D Young & Co LLP

(57) **Abstract**

A method for controlling permissions relating to online interactions of a sub-account, the sub-account being linked with a main account, the method comprising modifying permissions associated with a sub-account using the linked main account, the permissions controlling the ability of a sub-account to engage in online interactions, wherein the sub-account is a user account that is restricted such that a user of the sub-account is not able to modify permissions of the sub-account to the same degree as a user of the linked main account.

## Description

This disclosure relates to an online interaction control method.

Online interactions have become increasingly common in recent years, in particular interactions between players of online games and those performing general communication. An example of this is users being able to use voice chat to communicate with team members in an online game, which has become popular as it enables a team to coordinate their actions to achieve victory.

However, a problem associated with this is an increase in the number of abusive situations that may arise. When interacting with other users online, it is more common (relative to offline interactions) that people may disregard the feelings of others and act in a negative manner; this may be exacerbated in the context of online gaming due a player's poor performance or general in-game conduct. Being on the receiving end of such abuse may have a significant impact on a user's enjoyment of the game, and in view of this many games have 'mute' functions provided to allow a user to prevent communication from so-called 'toxic' players.

A mute function may be effective at halting online communications in many cases; however it may be desirable to avoid such communication at all rather than receiving abuse and then preventing further abuse from being received from that same player. This may be especially true when children are interacting with people online, as a parent may not wish them to be exposed to negativity or foul language or the like that may arise during the communication (even if the child is happy to continue communicating in such conditions). It may therefore be desirable for a parent to be able to prevent a child from experiencing such communications altogether.

The present disclosure provides a method to mitigate the above problems by allowing the management of which online interactions may be engaged in by a user account, the management being performed by another user account linked to the managed account.

This disclosure is defined by claims 1 and 15, with further respective aspects and features of the disclosure being defined in the appended claims.

Embodiments of the disclosure will now be described with reference to the accompanying drawings, in which:
Figure 1 schematically illustrates a set of linked user accounts;
Figure 2 schematically illustrates an interaction between sets of user accounts;
Figure 3 schematically illustrates an apparatus for managing permissions of user accounts.

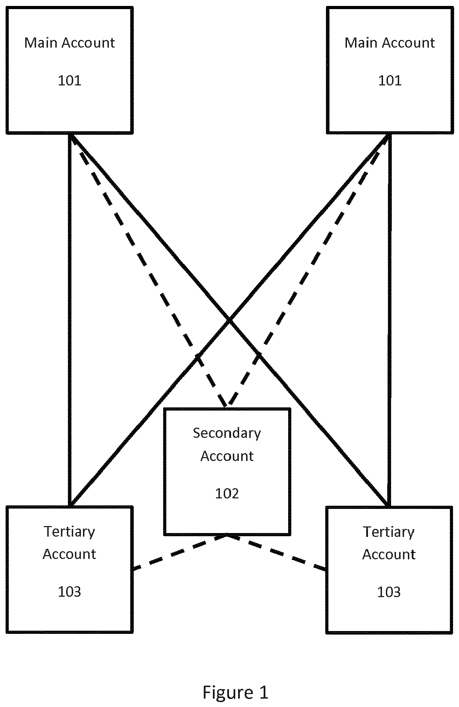

Figure 1 schematically illustrates a set of linked user accounts in which control of the permissions relating to online interactions of sub-accounts may be performed by at least the main accounts. In this Figure, there are 3 distinct tiers of user accounts - the main accounts 101, a secondary account 102 and tertiary accounts 103. The secondary account 102 and tertiary accounts 103 are all examples of sub-accounts that are linked to the main accounts 101. The connections between each of these accounts are exemplary only, and any appropriate manner of linking the accounts could be used (for example, only one main account being able to manage the tertiary accounts).

A method for controlling permissions relating to online interactions of a sub-account (the sub-account being linked with a main account) comprises modifying permissions associated with a sub-account using a linked main account, the permissions controlling the ability of a sub-account to engage in online interactions. The sub-account is a user account that is restricted such that a user of the sub-account is not able to modify permissions of the sub-account to the same degree as a user of the linked main account.

As noted above, sub-accounts are user accounts that are unable to manage every aspect of their account, and require management by a higher-tier account (such as the secondary account 102 or the main accounts 101) in at least certain aspects of their online interactions. Each of the tiers may relate to either the extent of the permissions granted to the accounts, or the ability of the accounts to manage the permissions of accounts in a lower tier. As noted above, the links shown in this Figure are entirely exemplary but may be used to show which accounts are able to influence the permissions or operation of other accounts (with the connections being unidirectional in this respect, such that the higher-tier accounts control the operation of the lower-tier accounts and not the reverse).

In the example of Figure 1, it is expected that either of the main accounts 101 are able to manage the permissions of the sub-accounts; in view of this it is therefore apparent that more than one main account is able to modify the permissions of a linked sub-account.

This permission management may relate to deciding which other accounts the sub-accounts are able to add as friends, the extent of communication allowed with each friend, how the sub-account can communicate in online game environments, and many other aspects of online interactions.

It would be appreciated by the skilled person that such a set of linked accounts could be extended, for example to insert a tier between the main and secondary accounts. Accounts in this tier could allow the user to control permissions of a secondary account that is itself operable to control the permissions of tertiary accounts. Alternatively, the accounts in such a tier could simply have fewer restrictions on their online interactions, but still have the same ability to modify permissions of the tertiary accounts (and not be able to modify the permissions of the secondary account). However, Figure 1 has been limited to 3 tiers for clarity.

In one example, the set of linked user accounts are used by a family; the main accounts 101 may belong to the parents, the secondary account 102 to an older child, and the tertiary accounts 103 to younger children. The older child may have an account that differs to those of the younger children as they have been granted greater freedom by the main accounts, or because they have the ability to manage certain permissions of the younger children's accounts.

However, it is not necessary that the linked accounts are restricted to a family-usage scenario, as any group could utilise such an arrangement. For example, for games consoles provided in a public space it may be desirable to limit the online capabilities using a centralised master account to which an administrator has the only access. This provides a more complete user experience than the more traditional option of using guest accounts, as it allows in-game items to be accrued on the user profile, in-game progress to be tracked, and more online features to be allowed, and the like.

Online functions to which access or use could be managed by main accounts for sub-accounts include, but are not limited to, any one or more of the following list:
- In-game chat functions;
- General chat functions;
- Access to multiplayer gaming;
- Message filters;
- Friend list management;
- Item trading, gifting or receiving;
- Downloadable content; and
- Online purchases.

In-game chat (voice or text) functions may be managed in a binary manner, such that the sub-account may either participate or not participate in in-game chat, or on a sliding scale in which the level of interaction allowed may be varied with a greater granularity. In one example, modifying the permissions of a sub-account comprises the restriction of voice communication with other users.

One implementation of the sliding scale of permissions could be relevant to an online environment in which users may be ranked by how well they conduct themselves in online communications. Using this ranking, a main account could set a threshold value of a variable that represents how positive or pleasant a user is when communicating, and only allow communication with users that exceed this threshold. An example of such a rating system is comparing number of games played with the number of reports about bad conduct received, although any other suitable method of determining how well a user conducts themselves online could be used.

General chat functions may be managed in a similar manner, but the chat is usually with friends rather than only users playing the same game. Chat may be managed so as to only allow text, images or voice chat (or any combination of these or other communication types); for example, text messages could be allowed freely whilst restricting media content sharing. This could be managed either on a per-friend basis, on a per-friend-category basis (when friends are categorised into one or more lists) or using a similar rating system to that described above with reference to the in-game chat. A main account may set a default allowed communication type for a sub-account to be applied to all users, and the sub-account may request additional permissions to be granted. Alternatively, the sub-account could be allowed to communicate in any way, and a main account could monitor their communications and restrict interactions where appropriate (for example, in response to abusive messages being received).

Access to multiplayer gaming could be performed in a binary manner, such as allowing or not allowing a sub-account to participate in online multiplayer games. Alternatively, permissions may be managed on the basis of specific games or genres or the like (i.e. in dependence upon game content). In some embodiments, access may only be allowed for games that supply specific servers for sub-accounts, or accounts that share similar permissions (such as with respect to communication).

The latter of these conditions may be advantageous in that users of a sub-account do not feel left out if they are the only player in a game that is not allowed to communicate with the team, for example. In such a manner, games could be designed to assign players to servers based upon account types or account permissions, in addition (or instead of) to more common variables such as skill level or location, so as to further decrease the risk of users of sub-accounts being exposed to abusive situations or the like.

Message filters may comprise filtering the reception of entire messages, such that a sub-account may not receive messages from users not on their friends list (for example), or simply modifying received messages so as to remove any expletives or otherwise unsavoury content. This could apply to images as well, if it is determined that the image may comprise adult content or other undesirable imagery, or indeed voice communications. In addition, messages could be censored so as to remove hyperlinks; while this may provide some inconvenience to the user of a sub-account, this is a common feature of many attempts to scam a user and therefore it may be preferable to err on the side of caution and prevent hyperlinks being received at all.

Friend list management for a sub-account may merely comprise the ability to add or remove friends from a sub-account (including the ability to accept or decline invitations to become friends). Alternatively, or in addition, the main account may have the ability to categorise other user accounts into different categories in a friends list of the sub-account, each category having a different set of permissions associated with it. When categorising other accounts, each of the sets of permissions may relate to the extent of communication that may be performed between the sub-account and the other user accounts.

For example, if the sub-account belongs to a child then a parent may be able to designate school friends as 'trusted friends' with which all forms of communication are allowed, 'other friends' for those that the parent is not so familiar with (a category with reduced communication permissions) and 'untrusted friends' with which communication is severely restricted. The latter category may be reserved for those that the child enjoys playing with, but does not actually know in person, or any users about which the parent has concerns, for example. In some embodiments, a sub-account is able to add friends to the 'untrusted friends' list without requiring confirmation from a main account. In one example, the viewing of a sub-account's online profile is restricted such only 'trusted friends' may be able to view the profile information of the sub-account.

It is possible that the friends list management could be automated to an extent, for example with respect to default settings defined by the account provider and/or main accounts associated with the linked sub-account. In one example, all new friends are added to the 'untrusted friends' category unless a main account specifies otherwise. Alternatively, or in addition, other user accounts are added to a particular category of the sub-account's friends list in dependence upon how many user accounts already present in that category also list that user account in the same category of their own friends list. For instance, a user account may be added to the sub-account's 'trusted friends' list by default if the user account appears in the 'trusted friends' list of more than a threshold number of the sub-account's own 'trusted friends' list. This could enable real-world friendship groups to be transferred online more easily, as once a few friends have added each other as trusted friends this can be identified when adding new friends.

In some embodiments, the user of the sub-account may be able to manage the categorisation of friends themselves; although this may be limited to 'demoting' friends to categories with restricted permissions. Alternatively, the user of the sub-account may be able to 'promote' friends to categories with fewer restrictions in certain circumstances, such as after a certain amount of in-game time together, certain duration of friendship or if the friend acquires a high rating (as described above with reference to the in-game communication).

Similarly to the management of in-game communication described above, default permissions for interacting with another user may be dependent upon a rating associated with that other user's profile that indicates whether they usually engage in positive interactions, and these defaults may be modified by the linked main account. For example, a user that is rated as a positive influence in the online community may automatically be added to the 'trusted friends' list of a sub-account. The categorisation performed in view of this rating could be re-evaluated periodically, so as to automatically promote or demote friends as appropriate; indeed, this could encourage good behaviour online, as accounts would be limited in their ability to communicate significantly if their rating were lowered due to bad behaviour.

Many online games incorporate in-game items and the trading of such items. A main account may wish to restrict the ability of a sub-account to perform such trades, so as to avoid an eager child making an unfair trade (for example) or to reduce the chance of a sub-account being 'scammed' by an online acquaintance. A sub-account may be prevented from engaging in trades at all, or may propose trades but require approval from a main account in order to finalise a trade. Restrictions could be dependent upon the in-game item's value (either in-game or 'real' value) or rarity, or any other suitable metric. A sub-account may also be restricted in its ability to purchase, send or receive in-game items, rather than just restricting trading.

Downloadable content is common in online games, either allowing users to provide more variety to an existing game or allowing a developer to generate more revenue by adding additional content (such as new maps) at a later date. In some cases, such as mods (modifications) for certain games, the suitability of the game for a particular user may be changed - for example, a child-friendly game could be modified to contain content only suitable for adults. It may therefore be desirable to restrict access to such content for a sub-account. Access could be restricted entirely, or may be dependent on an age ratings system that is provided, or may be dependent on any other appropriate method for filtering content.

Similarly, online purchases may be restricted with the additional motivation that a child often has little regard for the value of content purchased online, which may result in a large bill for parents. As such, it may be desirable for a main account to be able to restrict the ability of a sub-account to purchase online content. In one embodiment, the ability to purchase content may be entirely removed, or alternatively it may be restricted to a particular value of purchases in a predetermined time period or the like.

In one embodiment, a main account may be used to control the addition of friends to the sub-account's friends list. Optionally, the main account may also be able to control a permission level associated with the new friend; this is used to control the level of interaction permitted between the sub-account and the new friend.

An overall permission level may be set for each friend, for example using the categories described above ('trusted friend', 'other friend', 'untrusted friend'), which comprises a pre-set permission level for each aspect of communication. Alternatively, or in addition, the permission level associated with each aspect of communication may be set independently.

In some embodiments, a single main account is required to change the permissions of sub-accounts. However in some arrangements (such as that of Figure 1) it is possible that two ore more main accounts exist in a set of linked user accounts. In such arrangements, it is possible that either of the main accounts is able to modify the sub-accounts; alternatively, two or more of the main accounts must be used to modify a permission of a linked sub-account for the permissions of the sub-account to be updated - the number of main accounts that must approve the change may be defined as a set number, a binary 'one or all' choice or as a proportion of the number of main accounts in the set.

The requirements regarding number of accounts to approve a change may further be dependent upon the permission that is being modified; for example, adding a friend may only require the approval of one main account but allowing full communication with the new friend may require the approval of more than one main account. By requiring the permission of more than one main account, each user of a main account is made more aware of the activities of the sub-accounts and it ensures that the users of the main accounts are in agreement when allowing an extension of permissions.

As noted with reference to Figure 1, it may be the case that a subset of permissions associated with the sub-account may be modified by an intermediate (secondary) account that is linked to the same main account as the sub-account, the intermediate account being linked such that the permissions of the intermediate account are also modifiable by the main account.

With reference to the example of Figure 1, the responsibility for managing certain permissions of the tertiary accounts 103 could be delegated to the secondary account 102 by a main account 101. This may be advantageous to both the users of the main and tertiary accounts, as an older child (using a secondary account) may be likely to log into their account more frequently than an adult operating a main account, and thus the delay to making changes to permissions can be reduced which improves the online experience of the tertiary account user. Any of the functions of the main account as described in this specification may therefore be provided by the secondary account where appropriate.

The permissions that the secondary account is allowed to manage for the tertiary account may be set by the main account, or there may be a default list of permissions that are able to be modified by a designated secondary account. In one example, the secondary account may be used to permit the adding of a new friend to a tertiary account as an 'untrusted friend' but a main account is required to add them to a 'trusted friends' list or the like. The secondary account may have permissions that vary for different tertiary accounts, for example the secondary account may have more freedom to control the permissions of a tertiary account associated with an older child than a younger child, as the parents may want to control a younger child's account more closely. In some embodiments, two or more intermediate accounts are able to modify the permissions of the same sub-account; each of these accounts may be able to modify a different subset of the permissions of the same tertiary account.

In some embodiments, a sub-account user is able (or in some cases, required) to request permission changes rather than requiring the main account to have to review every action of the sub-accounts. For example, as noted above, a sub-account user may be able to add another user to the 'untrusted friends' list without explicit permission from a main account, but is able to request that the user is moved to a different list with more permissions. This reduces the burden on the user of the main account in having to review the sub-account's friend list to identify any new friends and associated permissions in detail, even when unnecessary.

In embodiments, it may be possible to grant temporary permissions. For example, it may be the case that the user of a main account is likely to be unable to log in for a period of time and as such it may be desirable to grant the sub-account greater freedom in this period; the main account could then review the changes to the sub-account (such as new friends and their categorisation) when they are next able to log in. Alternatively, permissions could be set such that a sub-account has restricted online capabilities for a period of time. In either case, this is an example of an embodiment in which permissions may be modified for a predetermined period of time after which the permissions are automatically modified a second time.

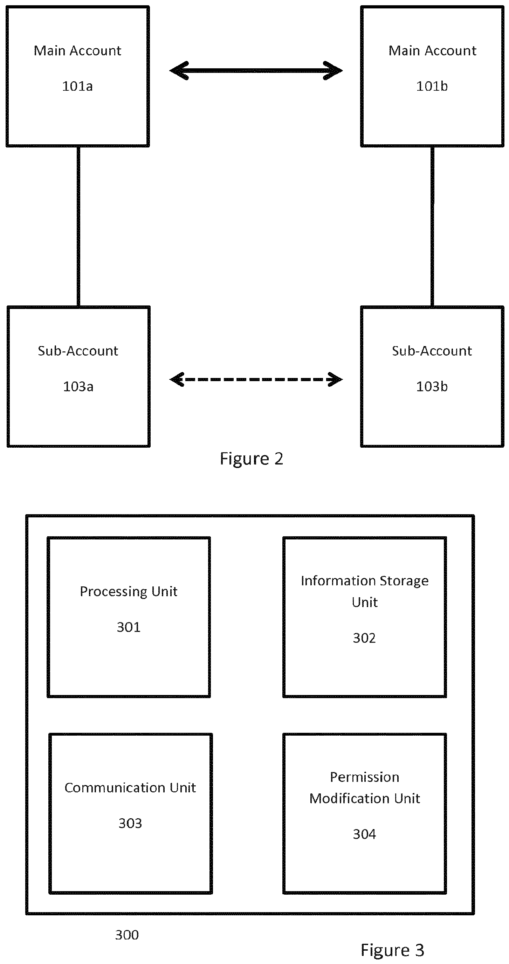

Figure 2 schematically illustrates interactions between a pair of sub-accounts (103a, 103b) that are managed by the respective main accounts (101 a, 101b). While only a single main account and a single sub-account is shown in each set of user accounts, it should be appreciated that the below discussion could equally apply to sets of any number or arrangement of accounts as described above (for example, sets in line with that shown in Figure 1). Such interactions may comprise any of the features described above.

In this example, the users of the sub-accounts 103a and 103b wish to add each other as friends in an online system. In an embodiment of the present invention, rather than being able to send each other a friend request, as in other embodiments, in this example the main account associated with each sub-account must initiate the processing of adding other accounts to the sub-accounts friends list.

For example, the user of a sub-account 103a may request (either using communication tools associated with the account, or in person or any other appropriate method) that the associated main account 101 a initiates the process of adding the sub-account 103b to the friends list of the sub-account 103a.

In some embodiments, the user of the main account 101 a may do this directly, by sending a friend request to the sub-account 103b on behalf of the sub-account 103a. This may then be accepted by the user of the sub-account 103b directly. Similarly, depending on the permissions granted to each account, the user of the sub-account 103a may instead send a request to add sub-account 103b to their friends list to the main account 101 b that is associated with the sub-account 103b.

In another embodiment, the user of the main account 101 a may instead contact the user of the main account 101b. The two users of the main accounts may then agree that it is appropriate for each sub-account to appear on the friends list of the other sub-account, and thus the sub-accounts may be added to each other's friends lists.

This latter embodiment may be achieved for example in the following manner: a user of one of sub-account 103a sends a friend request to the user of sub-account 103b, but their permission settings do not allow the friend request to be accepted (or not accepted at the level proposed by the friend request, e.g. as a trusted friend). Accordingly, a notification is sent from at least the recipient sub account 103b to its respective controlling main account 101b, comprising information identifying the other sub-account 103a so that at least the user of the main account 101 b (e.g. a respective parent of one of two children trying to make friends) can review the suitability of the friendship.

In one embodiment, the decision to accept an incoming friend request can be unilateral, i.e. the user of the main account 101 b can authorise acceptance of the friend request on behalf of the sub-account 103b, either by directly accepting the friend request on behalf of the sub-account, or by authorising the sub-account to accept that friend request, if they wish to do so.

Alternatively, as noted above the decision can be co-operative between the two main accounts 101 a, 101 b separately associated with the two sub-accounts 103a, 103b.

To facilitate this, in a first implementation, friend requests from sub-accounts include account data for their supervising main account(s), and this is included in the notification from the recipient sub-account to its respective controlling main account; alternatively in a second implementation the system requests account data from a central server, submitting the sub-account ID found in the friend request and receiving the account ID of the respective supervising main account. In another implementation where friend requests are relayed though a server, optionally the request from a sub-account is identified and the account ID of the respective supervising main account is added as part of the server's relaying process.

In any event, the user of the main account corresponding to the recipient sub account can now chose send a notification to the user of the main account corresponding to the sub account that sent the request, proposing to allow the friend request to be accepted. This may be done for example by clicking a button labelled 'Agree friendship with supervisor or carer of [sending sub-account ID]'. The user of the main account corresponding to the sub-account that sent the request can then accept this, thereby indicating permission from both supervising main accounts. At this point, the friend request is accepted (or permission is given for the recipient sub-account to choose to accept the friend request).

The users of the main accounts may also determine to which category the new friend is added, in line with the above description, or this may be determined automatically.

It should be noted that the embodiments described with reference to Figure 2 may be used in combination, or varied appropriately with respect to the permissions associated with each sub-account. For example, not every account in an online environment may fall into the main account/sub-account framework - there may be standalone accounts, for example. Some sub-accounts may be able to add friends, but not accept invitations; others may be able to accept invitations, but not add friends - or any subset of these alternatives (such as only being able to add/accept certain account types, such as other sub-accounts).

Figure 3 schematically illustrates a processing apparatus for implementing the method described above.

The processing apparatus 300 comprises a processing unit 301, an information storage unit 302, a communication unit 303 and a permission modification unit 304.

The processing unit 301 is operable to perform general processing associated with the apparatus, such as executing applications or games, and running an operating system. Local account management may also be managed by the processor, such as relaying a request from a sub-account to a main account to modify the permissions of the sub-account.

The information storage unit 302 is operable to store data, such as account information and related permissions. Of course, this information may be stored remotely on a server instead of locally, or as well as locally.

The communication unit 303 is operable to provide a connection to the internet, or other network. This may allow communication with other user accounts, such as the sending and receiving of messages and friend requests and the like.

The permission modification unit 304 is operable to modify permissions associated with a sub-account using the linked main account, the permissions controlling the ability of a sub-account to engage in online interactions. The permission modification unit 304 may perform modifications locally, and then transmit information about the modifications to a server that maintains user profiles, or may transmit information about desired changes in permissions to a server that updates the account permissions remotely. Alternatively, or in addition, any other suitable alternatives for managing the permissions may be implemented.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

## Claims

1. A method for controlling permissions relating to online interactions of a sub-account, the sub-account being linked with a main account, the method comprising:
modifying permissions associated with a sub-account using the linked main account, the permissions controlling the ability of a sub-account to engage in online interactions,
wherein the sub-account is a user account that is restricted such that a user of the sub-account is not able to modify permissions of the sub-account to the same degree as a user of the linked main account.

2. A method according to claim 1, wherein a first sub-account sends a friend request to a second sub-account, the method comprising the steps of:
notifying the friend request to a main account linked to the second sub account; and
receiving an indication of approval for the friend request from a user of said main account.

3. A method according to claim 2, comprising the steps of:
obtaining identification of a main account linked to the first sub account;
requesting approval for the friend request from said main account linked to the first sub account;
receiving an indication of approval for the friend request from said main account linked to the first sub account; and
approving the friend request between the two sub-accounts.

4. A method according to claim 1, wherein the main account is used to send friend requests to other accounts on behalf of the linked sub-account.

5. A method according to claim 4, wherein the main account sends a friend request to a second main account associated with a second sub-account, such that if the request is accepted the linked sub-account and the second sub-account each appear on the friends list of the other sub-account.

6. A method according to claim 1, wherein more than one main account is able to modify the permissions of a linked sub-account.

7. A method according to claim 1, wherein modifying the permissions comprises the categorisation of other user accounts into different categories in a friends list, each category having a different set of permissions associated with it.

8. A method according to claim 7, wherein a main account may set a default category for other user accounts to be added to when the user of the sub-account adds them to their friends list.

9. A method according to claim 7, wherein other user accounts are added to a particular category of the sub-account's friends list in dependence upon how many user accounts already present in that category also list that user account in the same category of their own friends list.

10. A method according to any one of the preceding claims, wherein the modification of permissions may relate to any one or more of the following list:
• Restricting voice communications;
• Restricting media content sharing;
• Censoring communication;
• Restricting the ability to trade, purchase, send or receive in-game items; and
• Restricting the ability to view profile information.

11. A method according to claim 1, wherein a subset of permissions associated with the sub-account may be modified by an intermediate account that is linked to the same main account as the sub-account, such that the permissions of the intermediate account are also modifiable by the main account.

12. A computer program which, when executed by a computer, causes a computer to perform the method of any one of the preceding claims.

13. An apparatus for controlling permissions relating to online interactions of a sub-account, the sub-account being linked with a main account, the apparatus comprising:
a permission modification unit for modifying permissions associated with a sub-account using the linked main account, the permissions controlling the ability of a sub-account to engage in online interactions,
wherein the sub-account is a user account that is restricted such that a user of the sub-account is not able to modify permissions of the sub-account to the same degree as a user of the linked main account.

14. An apparatus according to claim 13, comprising:
a receiver adapted to receive a friend request send to a second sub account from a first sub account;
a notifier for notifying the friend request to a main account linked to the second sub account; and
a user input for receiving an indication of approval for the friend request from a user of said main account.

15. An apparatus according to claim 14, comprising:
An ID processor operable to obtain identification of a main account linked to the first sub account;
A transmitter adapted to request approval for the friend request from said main account linked to the first sub account;
A receiver adapted to receive an indication of approval for the friend request from said main account linked to the first sub account; and
An approval processor adapted to approve the friend request between the two sub-accounts.
